(19) Europäisches Patentamt / European Patent Office / Office européen des brevets

(11) **EP 4 778 984 A1**

(12) **EUROPEAN PATENT APPLICATION**
published in accordance with Art. 153(4) EPC

(43) Date of publication:
**22.07.2026 Bulletin 2026/30**

(21) Application number: **24865423.8**

(22) Date of filing: **10.09.2024**

(51) International Patent Classification (IPC):
***C09C 3/08*** *(2006.01)* ***C09C 1/00*** *(2006.01)*
***C09D 201/00*** *(2006.01)*

(52) Cooperative Patent Classification (CPC):
**C09C 1/00; C09C 3/08; C09D 201/00**

(86) International application number:
**PCT/JP2024/032320**

(87) International publication number:
**WO 2025/057923 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 JP 2023147693**

(71) Applicant: **Sakai Chemical Industry Co., Ltd.**
**Sakai-shi, Osaka 590-8502 (JP)**

(72) Inventors:
- **FUJITA, Yuki**
  **Sakai-shi, Osaka 590-0985 (JP)**
- **ONISHI, Kasumi**
  **Sakai-shi, Osaka 590-0985 (JP)**
- **IEDA, Takuma**
  **Sakai-shi, Osaka 590-0985 (JP)**

(74) Representative: **Cabinet Beau de Loménie**
**103, rue de Grenelle / CS 90800**
**75340 Paris Cedex 07 (FR)**

(54) **METHOD FOR PRODUCING ZIRCONIUM OXIDE POWDER, AND ZIRCONIUM OXIDE POWDER**

(57) The present invention provides a method for producing a zirconium oxide powder with excellent dispersibility in organic solvents or resins. The method for producing a zirconium oxide powder according to the present invention includes a first step of preparing a dispersion by mixing materials including zirconium oxide, a solvent, and a phosphate represented by the following formula (1):

[Chem. 1]

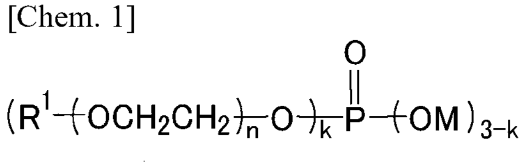

(1)

wherein $R^1$ represents a C1-C6 alkyl group, M represents a hydrogen atom, a metal atom, or an organic base, n represents a number from 1 to 8, and k represents 1 or 2; and a second step of spray-drying the dispersion obtained in the first step.

EP 4 778 984 A1

## Description

TECHNICAL FIELD

The present invention relates to a method for producing a zirconium oxide powder, and a zirconium oxide powder. Specifically, the present invention relates to a zirconium oxide powder that can be easily dispersed in organic solvents or resins, and a zirconium oxide powder.

BACKGROUND ART

Zirconium oxide has high transparency and a high refractive index and is therefore mainly used as a material for increasing the refractive index in optical and other applications (see Patent Literatures 1 to 3). Of these applications, when zirconium oxide is used to improve the refractive index of a resin molded body (coating film), the zirconium oxide is required to have good dispersibility in the resin. In a conventional art, in view of affinity, zirconium oxide is dispersed in a resin by preparing a dispersion of zirconium oxide in an organic solvent, mixing the dispersion with a resin, and then removing the organic solvent (see Patent Literature 4).

CITATION LIST

- Patent Literature

Patent Literature 1: JP 2010-132494 A
Patent Literature 2: JP 2019-038738 A
Patent Literature 3: JP 2022-143972 A
Patent Literature 4: WO 2022/181302

SUMMARY OF INVENTION

- Technical Problem

As described above, zirconium oxide is dispersed in a resin by mixing a dispersion of zirconium oxide in an organic solvent with a resin and then removing the solvent. This method must include the solvent removal step and is thus complex. Moreover, in order to increase the concentration of zirconium oxide in the resin, a larger amount of the dispersion needs to be mixed with the resin. This necessitates removal of a larger amount of the solvent or concentration, increasing the load.

Furthermore, the zirconium oxide dispersion itself presents various challenges, including an increased number of steps for, for example, solvent exchange to prepare a dispersion in a required solvent depending on the type of the solvent, difficulty in adjusting the concentration of zirconium oxide through solvent exchange, discharging a large amount of an organic waste liquid during the preparation, and the necessity to comply with the laws and regulations concerning hazardous materials.

Use of a zirconium oxide powder with excellent dispersibility in organic solvents or resins can omit the removal of a solvent for dispersion in a resin and solvent exchange in the preparation of a dispersion in an organic solvent. Therefore, such a zirconium oxide powder with excellent dispersibility in organic solvents or resins has been requested.

The present invention has been made in view of the above current situation and aims to provide a method for producing a zirconium oxide powder with excellent dispersibility in organic solvents or resins.

- Solution to Problem

The present inventors studied for a method for producing a zirconium oxide powder with excellent dispersibility in organic solvents or resins and found that a zirconium oxide powder with excellent dispersibility in organic solvents or resins can be produced by preparing a dispersion by mixing zirconium oxide, a phosphate having a specific structure, and a solvent, and then spray-drying the dispersion. Based on the finding, the present invention has been completed.

Specifically, the present invention relates to the following.

[1] A method for producing a zirconium oxide powder, including:

a first step of preparing a dispersion by mixing materials including zirconium oxide, a solvent, and a phosphate represented by the following formula (1):

[Chem. 1]

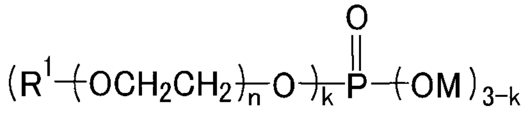

(1)

wherein $R^1$ represents a C1-C6 alkyl group, M represents a hydrogen atom, a metal atom, or an organic base, n represents a number from 1 to 8, and k represents 1 or 2; and

a second step of spray-drying the dispersion obtained in the first step.

[2] A method for producing a resin composition, including:

a first step of preparing a dispersion by mixing materials including zirconium oxide, a solvent, and a phosphate represented by the following formula (1):

[Chem. 2]

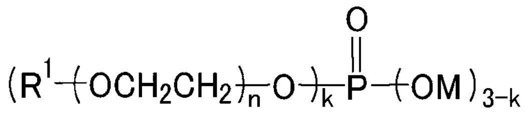

(1)

wherein $R^1$ represents a C1-C6 alkyl group, M represents a hydrogen atom, a metal atom, or an organic base, n represents a number from 1 to 8, and k represents 1 or 2;

a second step of spray-drying the dispersion obtained in the first step to obtain a zirconium oxide powder; and

a third step of mixing composition materials including the zirconium oxide powder obtained in the second step and a resin.

[3] A zirconium oxide powder, including

zirconium oxide particles surface-treated with a phosphate represented by the following formula (1):

[Chem. 3]

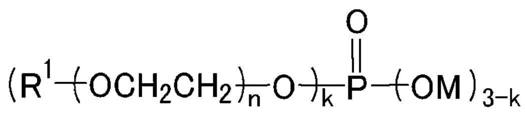

(1)

wherein $R^1$ represents a C1-C6 alkyl group, M represents a hydrogen atom, a metal atom, or an organic base, n represents a number from 1 to 8, and k represents 1 or 2,

the zirconium oxide powder having a bulk density of 1.5 g/$cm^3$ or less.

- Advantageous Effects of Invention

The method for producing a zirconium oxide powder according to the present invention is useful for producing a zirconium oxide powder that exhibits excellent dispersibility in organic solvents or resins and is suitable as a component for increasing the refractive index of resins.

DESCRIPTION OF EMBODIMENTS

Preferred embodiments of the present invention will be specifically described below, but the present invention is not limited to the following description, and modification may be suitably made without departing from the gist of the present invention.

1. Method for producing zirconium oxide powder

The method for producing a zirconium oxide powder according to the present invention includes

a first step of preparing a dispersion by mixing materials including zirconium oxide, a solvent, and a phosphate represented by the following formula (1):

[Chem. 4]

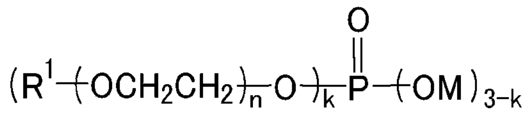

(1)

wherein $R^1$ represents a C1-C6 alkyl group, M represents a hydrogen atom, a metal atom, or an organic base, n represents a number from 1 to 8, and k represents 1 or 2; and
a second step of spray-drying the dispersion obtained in the first step.

A zirconium oxide powder with excellent dispersibility in organic solvents or resins can be produced by this method.
The amount of the phosphate used in the first step of the method for producing a zirconium oxide powder according to the present invention is preferably 5 to 40% by weight relative to 100% by weight of the zirconium oxide. When the phosphate is used in the above relative amount, the resulting zirconium oxide powder has a higher affinity for a resin and, when mixed with a resin, exhibits excellent dispersibility in the resin. The amount relative to 100% by weight of the zirconium oxide is more preferably 7 to 35% by weight, still more preferably 10 to 30% by weight.
The amount of the solvent used in the first step of the method for producing a zirconium oxide powder according to the present invention is preferably 1 to 3000% by weight relative to 100% by weight of the zirconium oxide. When the solvent is used in the above relative amount, the resulting zirconium oxide powder has a higher affinity for a resin and, when mixed with a resin, exhibits excellent dispersibility in the resin. The amount relative to 100% by weight of the zirconium oxide is more preferably 50 to 2500% by weight, still more preferably 100 to 2000% by weight.
Non-limiting examples of the solvent used in the first step include water; an alcohol such as methanol, ethyl alcohol, propyl alcohol, butyl alcohol, pentyl alcohol, hexyl alcohol, heptyl alcohol, octyl alcohol, nonyl alcohol, decyl alcohol, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, dipropylene glycol monomethyl ether, ethyl carbitol, butyl carbitol, 2-ethyl-1,3-hexanediol, methyl methoxy butanol, α-terpineol, β-terpineol, hexylene glycol, benzyl alcohol, 2-phenylethyl alcohol, isopalmityl alcohol, isostearyl alcohol, lauryl alcohol, ethylene glycol, propylene glycol, or glycerol; a ketone-based solvent such as acetone, methyl ethyl ketone, methyl isobutyl ketone, cyclohexanone, diacetone alcohol (4-hydroxy-4-methyl-2-pentanone), 2-octanone, isophorone (3,5,5-trimethyl-2-cyclohexen-1-on), or diisobutyl ketone (2,6-dimethyl-4-heptanone); an ester-based solvent such as ethyl acetate, butyl acetate, diethyl phthalate, dibutyl phthalate, acetoxy ethane, methyl butyrate, methyl hexanoate, methyl octanoate, methyl decanoate, methyl cellosolve acetate, ethylene glycol monobutylether acetate, propylene glycol monomethylether acetate, ethyl diglycol acetate, or 1,2-diacetoxy ethane; an ether-based solvent such as tetrahydrofuran, dimethyl ether, diethyl ether, dipropyl ether, ethylene glycol dimethyl ether, ethylene glycol diethyl ether, ethylene glycol dibutyl ether, propylene glycol dimethyl ether, ethoxyethyl ether, 1,2-bis(2-diethoxy) ethane, or 1,2-bis(2-methoxyethoxy) ethane; an ester ether such as 2-(2-butoxyethoxy) ethane acetate; an ether alcohol-based solvent such as 2-(2-methoxyethoxy) ethanol; a hydrocarbon solvent such as benzene, toluene, xylene, n-paraffin, isoparaffin, dodecyl benzene, turpentine oil, kerosene, or diesel; a nitrile-based solvent such as acetonitrile or propionitrile; a nitrogen-containing polar solvent such as dimethylacetamide, N,N-dimethylformamide, or N-methyl-2-pyrrolidone; and a silicone oil-based solvent. Water, methanol, and ethyl alcohol are preferred, and water is more preferred among these. One type or two or more types of these may be used. Note that some solvents pose the risk of fire or explosion; therefore, production must be carried out in a fire- and explosion-proof production facility after implementing sufficient safety measures.
The raw materials used in the first step may include additional components other than zirconium oxide, a phosphate, and a solvent. Examples of the additional components include a higher fatty acid, a metal salt of a higher fatty acid (metal soap), an anionic surfactant, a silane coupling agent, a titanium coupling agent, an aluminum coupling agent, and other coupling agents.
The silane coupling agent is desirably, but not limited to, an organosilicon compound represented by the following formula (2):

$R^2_m\text{-Si-}X_{4\text{-}m}$ (2)

wherein $R^2$ represents a non-reactive group or a group containing a reactive functional group, X represents a hydrolyzable group or a hydroxy group, and m is 1, 2, or 3.

Examples of the non-reactive group as $R^2$ in the formula (2) include an alkyl group, a cycloalkyl group, a halogenated alkyl group, a phenyl group, and an alkylphenyl group. Examples of the group containing a reactive functional group include an amino group, an epoxy group, a vinyl group, a mercapto group, and a (meth)acryloyl group.

Thus, specific examples of the silane coupling agent having a non-reactive group, which is known as a non-reactive silane coupling agent, include methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, isobutyltrimethoxysilane, butyltrimethoxysilane, hexyltrimethoxysilane, decyltrimethoxysilane, butyltriethoxysilane, isobutyltriethoxysilane, hexyltriethoxysilane, octyltriethoxysilane, decyltriethoxysilane, 3,3,3-trifluoropropyltrimethoxysilane, methyl-3,3,3-trifluoropropyldimethoxysilane, perfluorooctylethyltrimethoxysilane, perfluorooctylethyltriethoxysilane, perfluorooctylethyltriisopropoxysilane, and dimethylmethoxyhydroxysilane.

Of the silane coupling agents represented by the formula (2), specific examples of the silane coupling agent represented by the formula (2) in which $R^2$ represents a group containing a reactive functional group, which is known as a reactive silane coupling agent, include N-2-(aminoethyl)-3-aminopropyltrimethoxysilane, N-phenyl-3-aminopropyltrimethoxysilane,vinyltrimethoxysilane, vinyltriethoxysilane, vinyl tris(β-methoxy ethoxy)silane, β-(3,4-epoxycyclohexyl) ethyltrimethoxysilane, γ-glycidoxymethyltrimethoxysilane, γ-glycidoxymethyltriethoxysilane, γ-glycidoxyethyltrimethoxysilane, γ-glycidoxyethyltriethoxysilane, γ-glycidoxypropyltrimethoxysilane, γ-glycidoxypropyltriethoxysilane, γ-(β-glycidoxyethoxy)propyltrimethoxysilane, γ-(meth)acryloyloxymethyltrimethoxysilane, γ-(meth)acryloyloxymethyltriethoxysilane, γ-(meth)acryloyloxyethyltrimethoxysilane, γ-(meth)acryloyloxyethyltriethoxysilane, γ-(meth)acryloyloxypropyltrimethoxysilane, γ-(meth)acryloyloxypropyltriethoxysilane, and γ-mercaptopropyltrimethoxysilane.

One type or two or more types of these silane coupling agents may be used.

In the case of using a silane coupling agent as a raw material in the first step, the amount of the silane coupling agent relative to 100% by weight of the zirconium oxide is preferably 0.01 to 20% by weight. When the silane coupling agent is used in the above relative amount, the resulting zirconium oxide powder has a higher affinity for a resin and, when mixed with a resin, exhibits excellent dispersibility in the resin. The amount relative to 100% by weight of the zirconium oxide is more preferably 0.1 to 15% by weight, still more preferably 0.5 to 10% by weight.

In the case of using a silane coupling agent as a raw material in the first step, the phosphate and the silane coupling agent may be added to zirconium oxide in any order. Either of them may be added first.

The second step of the method for producing a zirconium oxide powder according to the present invention is a step of spray-drying the dispersion obtained in the first step.

Herein, the temperature in spray-drying the dispersion refers to a temperature at an inlet of a spray dryer upon introducing the dispersion to the dryer, and it is preferably 110°C to 240°C. Drying at such a temperature allows the resulting zirconium oxide powder to have a higher affinity for a resin and therefore, when the zirconium oxide powder is mixed with a resin, the zirconium oxide powder can exhibit excellent dispersibility in the resin. The temperature in the spray-drying is more preferably 120°C to 230°C, still more preferably 130°C to 200°C.

The method for producing a zirconium oxide powder according to the present invention may include additional steps other than the first step and the second step. Examples of the additional steps include a crushing step and a classification step.

2. Method for producing resin composition

The present invention also encompasses a method for producing a resin composition, including the first step and the second step of the method for producing a zirconium oxide powder and thereafter a third step of mixing composition materials including the zirconium oxide powder obtained in the second step and a resin.

Since the zirconium oxide powder obtained by the above-described method for producing a zirconium oxide powder is highly dispersible in resins, a resin composition produced through such a production method can obtain high light transmittance and a high refractive index.

The amount of the zirconium oxide powder used in the third step is preferably 30 to 1000% by weight relative to 100% by weight of the resin used in the third step. The amount is more preferably 40 to 700% by weight, still more preferably 50 to 500% by weight, particularly preferably 50 to 350% by weight.

The resin used in the third step is not limited and may be a thermoplastic resin or a thermosetting resin. Examples of the resin include an epoxy resin; a phenolic resin; a polyphenylene sulfide (PPS) resin; a polyester-based resin; a polyamide- or polyimide-based polymer such as polyamide or polyimide; a polyolefin-based resin such as polystyrene, polyethylene, or polypropylene; a chlorine-based resin such as polyvinyl chloride or polyvinylidene chloride; a fluororesin; (meth)acrylic resins including a monofunctional (meth)acrylate (e.g., poly(methyl methacrylate), an ethylene/ethyl

acrylate copolymer (EEA) resin, 2-ethylhexyl (meth)acrylate, or benzyl (meth)acrylate), a bifunctional (meth)acrylate (e.g., ethylene glycol di(meth)acrylate or 1,6-hexanediol-di(meth)acrylate), and a polyfunctional (meth)acrylate (e.g., pentaerythritol (tri/tetra)(meth)acrylate or dipentaerythritol hexa(meth)acrylate); a carbonate-based resin such as polycarbonate; polyurethane; polyacetal; an ether-based resin such as polyphenylene ether or polyether imide; a diene-based polymer such as an acrylonitrile-butadiene-styrene copolymer (ABS) resin; a liquid crystal resin (LCP); and a silicon resin. Preferred among these is an acrylic resin. One type or two or more types of these may be used.

The composition materials including the zirconium oxide powder and the resin used in the third step may include a solvent. In the composition materials which include a solvent, the amount of the solvent relative to 100% by weight of the composition materials is preferably 1 to 300% by weight. The amount is more preferably 10 to 200% by weight, still more preferably 30 to 100% by weight.

The solvent used in the third step may be a solvent that is the same as or similar to the above-described solvent used in the first step of the method for producing a zirconium oxide powder according to the present invention.

The composition materials including the zirconium oxide powder and the resin used in the third step may include a polymerization initiator. In the composition materials which include a polymerization initiator, the amount of the polymerization initiator relative to 100% by weight of the composition materials is preferably 0.1 to 10% by weight. The amount is more preferably 0.5 to 9% by weight, still more preferably 1 to 8% by weight.

The polymerization initiator may be any of known photopolymerization initiators and thermal polymerization initiators.

The composition materials including the zirconium oxide powder and the resin used in the third step may include additional components other than the zirconium oxide powder, the resin, and the solvent.

Examples of the additional components include an ultraviolet absorber, an antioxidant, a fluorescent brightening agent, a photosensitizer, a dye, a pigment, a thickener, a lubricant, a defoamer, a leveling agent, a gloss agent, an antistatic agent, and a conducting agent.

The amounts of the additional components may be optimized according to the intended use or desired properties of the zirconium oxide-containing resin composition.

The method for producing a resin composition according to the present invention may include additional steps other than the first, second, and third steps. Examples of the additional steps include a resin molding step.

3. Zirconium oxide powder, and zirconium oxide powder-containing resin composition

A zirconium oxide powder produced by the method for producing a zirconium oxide powder according to the present invention includes zirconium oxide particles which are surface-treated with a phosphate represented by the following formula (1):

[Chem. 5]

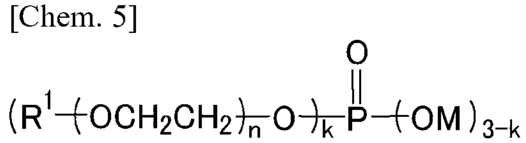

(1)

wherein $R^1$ represents a C1-C6 alkyl group, M represents a hydrogen atom, a metal atom, or an organic base, n represents a number from 1 to 8, and k represents 1 or 2.

This zirconium oxide powder features not only excellent dispersibility in organic solvents or resins but also a low bulk density. The bulk density is preferably 1.5 g/$cm^3$ or less. Such a zirconium oxide powder is also an aspect of the present invention. Specifically, the zirconium oxide powder includes zirconium oxide particles surface-treated with a phosphate represented by the following formula (1):

[Chem. 6]

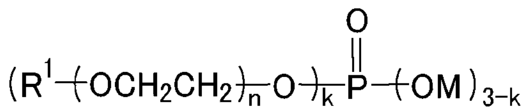

(1)

wherein $R^1$ represents a C1-C6 alkyl group, M represents a hydrogen atom, a metal atom, or an organic base, n represents a number from 1 to 8, and k represents 1 or 2, and the zirconium oxide powder has a bulk density of 1.5 g/$cm^3$ or less.

In the formula (1), $R^1$ represents a C1-C6 alkyl group, preferably a C1-C5 alkyl group, more preferably a C1-C4 alkyl group.

In the formula (1), M independently represents a hydrogen atom, a metal atom, or an organic base. Examples of

the organic base include an ammonium group and an organic amine group. The metal atom is not limited. Examples thereof include a Group 1 metal atom in the periodic table such as Li, Na, or K and a Group 2 metal atom in the periodic table such as Mg or Ca. M preferably represents a hydrogen atom.

In the formula (1), n represents a number from 1 to 8. Preferably, n represents a number from 1 to 7, more preferably a number from 1 to 6.

The zirconium oxide powder according to the present invention has a bulk density of preferably 1.2 $g/cm^3$ or less, more preferably 1.0 $g/cm^3$ or less for easy loosening of the powder during dispersion. The bulk density is preferably 0.05 $g/cm^3$ or more, more preferably 0.1 $g/cm^3$ or more for easy handling of the powder.

The bulk density of the zirconium oxide powder according to the present invention is measured by the following method.

<Bulk density measurement method>

A sample is put in a glass container having an outer diameter of 18 mm, an inner diameter of 15 mm, and a volume of 6.55 $cm^3$ until it overflows. The portion of the sample piled up above the top end of the glass container is leveled off with a levelling plate. The weight of the sample is calculated by subtracting the weight of the container from the measured weight. The bulk density is determined using the following expression.

$$\text{Bulk density (g/cm}^3\text{)} = \text{Weight of sample (g) /Volume of glass container (cm}^3\text{)}$$

The zirconium oxide powder according to the present invention is preferably obtained by subjecting zirconium oxide to a surface treatment with a phosphate represented by the formula (1) in the relative amount described in the method for producing a zirconium oxide powder according to the present invention. The zirconium powder obtained through the surface treatment with such a relative amount of the phosphate has a higher affinity for a resin and, when mixed with a resin, exhibits excellent dispersibility in the resin.

The zirconium oxide powder according to the present invention is obtained through the surface treatment with a phosphate represented by the formula (1). The surface treatment of the zirconium oxide powder may use a different component in addition to the phosphate.

Examples of the different component for the surface treatment in addition to the phosphate include a silane coupling agent.

Examples of the silane coupling agent include the silane coupling agents described above regarding the method for producing a zirconium oxide powder according to the present invention.

In the zirconium oxide powder according to the present invention which is obtained through the surface treatment with a silane coupling agent in addition to the phosphate, the amount the silane coupling agent is as described above regarding the method for producing a zirconium oxide powder according to the present invention.

The zirconium oxide powder according to the present invention and zirconium oxide as a raw material thereof each preferably have an average particle size of 1 to 15 nm. The zirconium oxide powder or zirconium oxide having the above average particle size can provide a zirconium oxide powder with excellent dispersibility. The average particle size of the zirconium oxide powder is more preferably 1 to 12 nm, still more preferably 1 to 10 nm.

The average particle sizes of the zirconium oxide powder according to the present invention and zirconium oxide as a raw material thereof can be measured by dynamic light scattering.

As described above, the zirconium oxide powder according to the present invention exhibits excellent dispersibility in resins and therefore can be suitably used as a component for increasing the refractive index of resins. Such a zirconium oxide-containing resin composition that contains the zirconium oxide powder according to the present invention and a resin is also an aspect of the present invention.

Examples of the resin contained in the zirconium oxide-containing resin composition according to the present invention include the resins described above regarding the method for producing the zirconium oxide-containing resin composition according to the present invention.

The relative amount of the zirconium oxide powder in the zirconium oxide-containing resin composition is the same as the relative amount described above regarding the method for producing the zirconium oxide-containing resin composition according to the present invention.

The zirconium oxide-containing resin composition may contain a solvent. Non-limiting examples of the solvent in the resin composition include the solvents used in the first step of the method for producing a zirconium oxide powder according to the present invention.

The relative amount of the solvent in the zirconium oxide-containing resin composition is the same as the amount of the solvent relative to the amount of the composition materials including the zirconium oxide powder and the resin used in the third step of the method for producing a resin composition according to the present invention.

The zirconium oxide-containing resin composition may contain a polymerization initiator. The polymerization initiator contained in the resin composition is not limited. One type or two or more types of known photopolymerization initiators and thermal polymerization initiators may be used.
The relative amount of the polymerization initiator in the zirconium oxide-containing resin composition is the same as the amount of the polymerization initiator relative to the amount of the composition materials including the zirconium oxide powder and the resin used in the third step of the method for producing a resin composition according to the present invention.
The zirconium oxide-containing resin composition may contain additional components other than the resin, the zirconium oxide powder, the solvent, and the polymerization initiator. The additional components are as described above for the additional components which may be contained in the composition materials including the zirconium oxide powder and the resin used in the third step of the method for producing a resin composition according to the present invention.
The relative amounts of the additional components other than the resin, the zirconium oxide powder, and the solvent contained in the zirconium oxide-containing resin composition may be optimized according to the intended use or desired properties of the zirconium oxide-containing resin composition.

EXAMPLES

The present invention will be described in detail with reference to the following specific examples. The present invention is not limited to the examples.
Hereinbelow, zirconium oxide as a raw material before surface-treated with a phosphate is referred to as "zirconium oxide", while zirconium oxide after the surface treatment is referred to as "surface-treated zirconia".

Synthesis Example 1

(Synthesis of phosphate)

A 1000 mL four-necked flask was purged with nitrogen and then charged with 436 g (2.1 mol) of triethylene glycol monobutyl ether (available from Tokyo Chemical Industry Co., Ltd.). To the flask was added 100 g (0.7 mol) of phosphoric anhydride (available from Tokyo Chemical Industry Co., Ltd.) (molar ratio; phosphoric anhydride:triethylene glycol monobutyl ether = 1:3) under a nitrogen atmosphere. The mixture was heated and stirred at 85°C for six hours to obtain 537 g of trioxyethylene monobutyl ether phosphate (the carbon number of R in the formula (1) is 4, and n = 3, hereinafter referred to as a phosphate compound 1).

Synthesis Example 2

(Synthesis of phosphate)

A tetraoxyethylene monomethyl ether phosphate (the carbon number of R in the formula (1) is 1, and n = 4, hereinafter referred to as a phosphate compound 2) was obtained as in Synthesis Example 1, except that the triethylene glycol monobutyl ether was changed to tetraethylene glycol monomethyl ether.

Example 1

(Powder)

To a mixed liquid of 50 g of an aqueous zirconium oxide particle dispersion SZR-W (available from Sakai Chemical Industry Co., Ltd., zirconium oxide concentration 30.2% by weight, zirconium oxide with an average particle size of 3 nm as measured by dynamic light scattering) and 97 g of pure water was added dropwise a mixed liquid of 3 g (20% by weight relative to 100% by weight of the zirconium oxide particles) of the phosphate compound 1 synthesized in the above synthesis example and 150 g of pure water to obtain a slurry containing the zirconium oxide particles and the phosphate compound 1.
The slurry was dried at an inlet temperature of 180°C and a liquid delivery flow rate of 6 mL/min with a spray dryer (ADL-311 available from Yamato Scientific Co., Ltd.) to obtain a powder A containing zirconia particles surface-treated with the phosphate compound 1 (surface-treated zirconia particles). The powder A had a bulk density of 0.89 g/cm$^3$.

(Resin composition)

After adding 0.43 g of propylene glycol monomethyl ether (hereinafter also referred to as PGME) to 0.84 g of the

powder A, 0.16 g of pentaerythritol (tri/tetra)acrylate (hereinafter also referred to as PETRA, available from DAICEL-ALLNEX LTD.) was added, thereby preparing a resin composition A containing the surface-treated zirconia particles.

(Cured product)

A photopolymerization initiator (Irgacure 184 available from BASF Japan Ltd.) was added to the resin composition A containing the surface-treated zirconia particles while controlling the amount of the photopolymerization initiator to be 5% by weight relative to 100% by weight of the resin concentration in the resin composition A. The mixture was applied to a surface of a glass plate as a substrate with an applicator. Thereafter, the solvent was evaporated by air-drying overnight. The resulting resin composition A containing the surface-treated zirconia particles was cured by irradiation with UV light to obtain a cured resin film A containing the surface-treated zirconia particles.

Example 2

(Powder)

To a mixed liquid of 50 g of an aqueous zirconium oxide particle dispersion SZR-GW (available from Sakai Chemical Industry Co., Ltd., zirconium oxide concentration 30.2% by weight, zirconium oxide with an average particle size of 8 nm as measured by dynamic light scattering) and 97 g of pure water was added dropwise a mixed liquid of 3 g (20% by weight relative to 100% by weight of the zirconium oxide particles) of the phosphate compound 1 synthesized in the above synthesis example and 150 g of pure water to obtain a slurry containing the zirconium oxide particles and the phosphate compound 1.

The slurry was dried at an inlet temperature of 180°C and a liquid delivery flow rate of 6 mL/min with a spray dryer (ADL-311 available from Yamato Scientific Co., Ltd.) to obtain a powder B containing zirconia particles surface-treated with the phosphate compound 1 (surface-treated zirconia particles).

(Resin composition)

After adding 0.43 g of MeOH to 0.72 g of the powder B, 0.28 g of pentaerythritol (tri/tetra)acrylate (PETRA available from DAICEL-ALLNEX LTD.) was added, thereby preparing a resin composition B containing the surface-treated zirconia particles.

(Cured product)

A photopolymerization initiator (Irgacure 184 available from BASF Japan Ltd.) was added to the resin composition B containing the surface-treated zirconia particles while controlling the amount of the photopolymerization initiator to be 5% by weight relative to 100% by weight of the resin concentration in the resin composition B. The mixture was applied to a surface of a glass plate as a substrate with an applicator. Thereafter, the solvent was evaporated by air-drying overnight. The resulting zirconium element-containing resin composition was cured by irradiation with UV light to obtain a cured resin film B containing the surface-treated zirconia particles.

Examples 3 and 4

Powders C and D each containing zirconia particles surface-treated with the phosphate compound 1 (surface-treated zirconia particles), resin compositions C and D each containing the surface-treated zirconia particles, and cured resin films C and D each containing the surface-treated zirconia particles were obtained as in Example 2, except that the amounts of dispersants added were changed as indicated in Table 1. The powder C had a bulk density of 0.93 g/cm$^3$. The powder D had a bulk density of 0.89 g/cm$^3$.

Example 5

(Powder)

To a mixed liquid of 33.3 g of an aqueous zirconium oxide particle dispersion SZR-W (available from Sakai Chemical Industry Co., Ltd., zirconium oxide concentration 30.2% by weight, zirconium oxide with an average particle size of 3 nm as measured by dynamic light scattering) and 114.7 g of pure water was added dropwise a mixed liquid of 1.0 g (10% by weight relative to 100% by weight of the zirconium oxide particles) of the phosphate compound 1 synthesized in the above synthesis example, 50.0 g of pure water, and 1.0 g (10% by weight relative to 100% by weight of the zirconium

oxide particles) of a silane coupling agent (KBM-503 available from Shin-Etsu Chemical Co., Ltd.) to obtain a slurry containing the zirconium oxide particles, the phosphate, and the silane coupling agent.

The slurry was dried at an inlet temperature of 180°C and a liquid delivery flow rate of 6 mL/min with a spray dryer (ADL-311 available from Yamato Scientific Co., Ltd.) to obtain a powder E containing zirconia particles surface-treated with the phosphate compound 1 and the silane coupling agent (surface-treated zirconia particles). The powder E had a bulk density of 0.92 g/$cm^3$.

(Resin composition)

After adding 0.43 g of MEK to 0.84 g of the powder E, 0.16 g of pentaerythritol (tri/tetra)acrylate (PETRA available from DAICEL-ALLNEX LTD.) was added, thereby preparing a resin composition E containing the surface-treated zirconia particles.

(Cured product)

A photopolymerization initiator (Irgacure 184 available from BASF Japan Ltd.) was added to the resin composition E containing the surface-treated zirconia particles while controlling the amount of the photopolymerization initiator to be 5% by weight relative to 100% by weight of the resin concentration in the resin composition E. The mixture was applied to a surface of a glass plate as a substrate with an applicator. Thereafter, the solvent was evaporated by air-drying overnight. The resulting resin composition containing the surface-treated zirconia particles was cured by irradiation with UV light to obtain a cured resin film E containing the surface-treated zirconia particles.

Example 6

(Powder)

To a mixed liquid of 50 g of an aqueous zirconium oxide particle dispersion SZR-W (available from Sakai Chemical Industry Co., Ltd., zirconium oxide concentration 30.2% by weight, zirconium oxide with an average particle size of 3 nm as measured by dynamic light scattering) and 97 g of pure water was added dropwise a mixed liquid of 3 g (20% by weight relative to 100% by weight of the zirconium oxide particles) of the phosphate compound 2 synthesized in the above synthesis example and 150 g of pure water to obtain a slurry containing the zirconia particles surface-treated with the phosphate compound 2 (surface-treated zirconia particles).

The slurry was dried at an inlet temperature of 180°C and a liquid delivery flow rate of 6 mL/min with a spray dryer (ADL-311 available from Yamato Scientific Co., Ltd.) to obtain a powder F containing zirconia particles surface-treated with the phosphate compound 2 (surface-treated zirconia particles). The powder F had a bulk density of 0.92 g/$cm^3$.

(Resin composition)

After adding 0.43 g of PGME to 0.84 g of the powder F, 0.16 g of pentaerythritol (tri/tetra)acrylate (PETRA available from DAICEL-ALLNEX LTD.) was added, thereby preparing a resin composition F containing the surface-treated zirconia particles.

(Cured product)

A photopolymerization initiator (Irgacure 184 available from BASF Japan Ltd.) was added to the resin composition F containing the surface-treated zirconia particles while controlling the amount of the photopolymerization initiator to be 5% by weight relative to 100% by weight of the resin concentration in the resin composition F. The mixture was applied to a surface of a glass plate as a substrate with an applicator. Thereafter, the solvent was evaporated by air-drying overnight. The resulting zirconium element-containing composition was cured by irradiation with UV light to obtain a cured resin film F containing the surface-treated zirconia particles.

Comparative Example 1

To a mixed liquid of 50 g of an aqueous zirconium oxide particle dispersion SZR-W (available from Sakai Chemical Industry Co., Ltd., zirconium oxide concentration 30.2% by weight, zirconium oxide with an average particle size of 3 nm as measured by dynamic light scattering) and 97 g of pure water was added dropwise a mixed liquid of 3 g (20% by weight relative to 100% by weight of the zirconium oxide particles) of polyoxyethylene lauryl ether phosphate (PLYSURF A219B available from DAI-ICHI KOGYO SEIYAKU Co., Ltd. ) and 150 g of pure water to obtain a slurry containing the

zirconium oxide particles and the phosphate.
The slurry was dried at an inlet temperature of 180°C and a liquid delivery flow rate of 6 mL/min with a spray dryer (ADL-311 available from Yamato Scientific Co., Ltd.) to obtain a powder G containing zirconia particles surface-treated with the phosphate (surface-treated zirconia particles).
When 0.36 g of PGME was added to 0.24 g of the powder G, the particles did not disperse but settled, causing white turbidity. Thus, it was impossible to form a coating film from the resulting mixture.

Comparative Example 2

To a mixed liquid of 50 g of an aqueous zirconium oxide particle dispersion SZR-W (available from Sakai Chemical Industry Co., Ltd., zirconium oxide concentration 30.2% by weight, zirconium oxide with an average particle size of 3 nm as measured by dynamic light scattering) and 97 g of pure water was added dropwise a mixed liquid of 3 g (20% by weight relative to 100% by weight of the zirconium oxide particles) of polyoxyalkylene alkyl ether phosphate (PLYSURF A208F available from DAI-ICHI KOGYO SEIYAKU Co., Ltd.) and 150 g of pure water to obtain a slurry containing the zirconium oxide particles surface-treated with the phosphate (surface-treated zirconia particles).
The slurry was dried at an inlet temperature of 180°C and a liquid delivery flow rate of 6 mL/min with a spray dryer (ADL-311 available from Yamato Scientific Co., Ltd.) to obtain a powder H containing the surface-treated zirconia particles and the phosphate. The powder H had a bulk density of 1.01 g/cm$^3$.
When 0.36 g of PGME was added to 0.24 g of the powder H, the particles did not disperse but settled, causing white turbidity. Thus, it was impossible to form a coating film from the resulting mixture.

Comparative Example 3

To a mixed liquid of 50 g of an aqueous zirconium oxide particle dispersion SZR-W (available from Sakai Chemical Industry Co., Ltd., zirconium oxide concentration 30.2% by weight, zirconium oxide with an average particle size of 8 nm as measured by dynamic light scattering) and 97 g of pure water was added dropwise a mixed liquid of 3 g (20% by weight relative to 100% by weight of the zirconium oxide particles) of the phosphate compound 1 synthesized in the above synthesis example and 150 g of pure water to obtain a slurry containing zirconia particles surface-treated with the phosphate compound 1 (surface-treated zirconia particles).
The slurry was placed in an evaporating dish and allowed to stand and dry overnight at 105°C to obtain a powder I containing the surface-treated zirconia particles and the phosphate. The powder I had a bulk density of 1.68 g/cm$^3$.
When 2.0 g of PGME was added to 0.2 g of the powder I, the particles did not disperse but settled, causing white turbidity. Thus, it was impossible to form a coating film from the resulting mixture.
The powders, the resin compositions containing surface-treated zirconia particles, and the cured resin films containing surface-treated zirconia particles obtained in Examples 1 to 6 were subjected to the following evaluations. Table 1 shows the results.
Table 1 includes the information of Comparative Examples 1 to 3 which could not be subjected to the evaluations.

<Evaluation of solvent dispersibility of powder containing surface-treated zirconia particles>

The dispersibility of each powder in an organic solvent was evaluated as follows.

◦◦: Transparent and fluid
◦: Not transparent but fluid
Δ: Thickened regardless of transparency
×: Not uniformly dispersed due to thickening or aggregation

<Appearance of resin composition containing surface-treated zirconia particles>

The appearance of each resin composition containing surface-treated zirconia particles was evaluated as follows.

◦◦: Transparent and fluid
◦: Not transparent but fluid
Δ: Thickened regardless of transparency
×: Not uniformly dispersed due to thickening or aggregation

<Thickness of cured resin film containing surface-treated zirconia particles>

The thicknesses at 20 arbitrary selected points of each cured film were measured with "Linear gauge sensor GS-1830A" available from Ono Sokki Co., Ltd. and averaged to determine a film thickness (μm) .

<Total light transmittance and haze of cured resin film containing surface-treated zirconia particles>

The total light transmittance and haze of each cured film were measured with a haze meter (NDH-4000 available from Nippon Denshoku Industries Co., Ltd.).

<Crack and adhesion of cured resin film containing surface-treated zirconia particles>

The appearance of each cured film was visually inspected and evaluated based on the following criteria.

◦◦: No cracks in the film surface and no deterioration of adhesion (peeling from the substrate) were observed in the cured product.
◦: Cracks in the film surface and deterioration of adhesion (peeling from the substrate) were observed at several parts.
×: Cracks in the film surface and deterioration of adhesion (peeling from the substrate) were observed at many parts, failing to form a film.

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Surface treatment agent | | Compound 1 | Compound 1 | Compound 1 | Compound 1 | Compound 1 | Compound 2 | PLYSURF A219B | PLYSURF A208F | Compound 1 |
| In the formula (1) | Carbon number of R | 4 | 4 | 4 | 4 | 4 | 1 | 12 | 8 | 4 |
| | n | 3 | 3 | 3 | 3 | 3 | 4 | 1 to 30 | 1 to 30 | 3 |
| Amount of compound represented by the formula (1) relative to zirconium oxide (% by weight) | | 20 | 20 | 30 | 10 | 10 | 20 | 20 | 20 | 20 |
| Silane coupling agent | | - | - | - | - | KBM-503 | - | - | - | - |
| Amount of silane coupling agent relative to zirconium oxide (% by weight) | | | - | - | - | 10 | - | - | - | - |
| Drying method | | Spray drying | Spray drying | Spray drying | Spray drying | Spray drying | Spray drying | Spray drying | Spray drying | Heat drying |
| Solvent type in resin composition | | PGME | MeOH | MeOH | MeOH | MEK | PGME | PGME | PGME | PGME |
| Dispersibility of surface-treated zirconia powder particles in solvent | | ○○ | ○○ | ○○ | ○ | ○○ | ○○ | × | × | × |
| Appearance of resin composition containing surface-treated zirconia particles | | ○○ | ○○ | ○○ | ○ | ○○ | ○○ | - | - | - |
| Average particle size of zirconium oxide (nm) | | 3 | 8 | 8 | 8 | 3 | 3 | 3 | 3 | 3 |
| Bulk density of zirconium oxide powder particles ($g/cm^3$) | | 0.89 | - | 0.93 | 0.89 | 0.92 | 0.92 | - | 1.01 | 1.68 |

(continued)

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Formulation of cured product (% by weight) | Zirconium oxide | 70 | 60 | 60 | 60 | 70 | 70 | - | - | - |
| | Compound represented by the formula (1) | 14 | 12 | 18 | 6 | 7 | 14 | - | - | - |
| | Silane coupling agent | - | - | - | - | 7 | - | - | - | - |
| | Polymerizable resin | 16 | 28 | 22 | 34 | 16 | 16 | - | - | - |
| Properties of cured product | Film thickness (μm) | 18.5 | 18.6 | 25.2 | 15.7 | 26 | 16.6 | - | - | - |
| | Transparency (%) | 97.5 | 97.96 | 97.82 | 98.03 | 97.2 | 97.48 | - | - | - |
| | Haze (%) | 1.14 | 0.47 | 0.97 | 0.3 | 0.25 | 0.28 | - | - | - |
| | Cracks in film surface | ○○ | ○○ | ○○ | ○○ | ○○ | ○○ | - | - | - |
| | Adhesion to substrate | ○○ | ○○ | ○○ | ○○ | ○○ | ○○ | - | - | - |

The results of Examples 1 to 6 and Comparative Examples 1 to 3 revealed that the zirconium oxide powder surface-treated with a phosphate (surface-treated zirconia particles) according to the present invention is highly dispersible in a solvent. The results also revealed that the zirconium oxide powder (surface-treated zirconia powder) according to the present invention is highly dispersible in a resin, and a resin composition obtained by mixing the zirconium oxide powder according to the present invention with a resin can form an excellent cured product that has high transparency, good adhesion to a substrate, and no cracks in the surface.

## Claims

**1.** A method for producing a zirconium oxide powder, comprising:

a first step of preparing a dispersion by mixing materials including zirconium oxide, a solvent, and a phosphate represented by the following formula (1):

[Chem. 1]

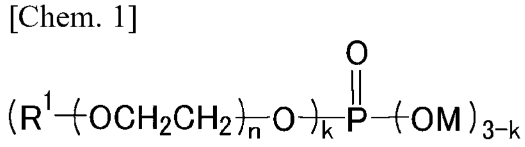

(1)

wherein $R^1$ represents a C1-C6 alkyl group, M represents a hydrogen atom, a metal atom, or an organic base, n represents a number from 1 to 8, and k represents 1 or 2; and
a second step of spray-drying the dispersion obtained in the first step.

**2.** A method for producing a resin composition, comprising:

a first step of preparing a dispersion by mixing materials including zirconium oxide, a solvent, and a phosphate represented by the following formula (1):

[Chem. 2]

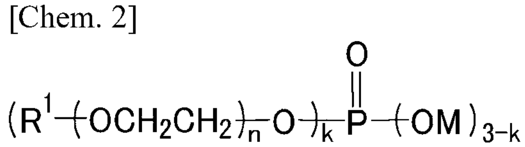

(1)

wherein $R^1$ represents a C1-C6 alkyl group, M represents a hydrogen atom, a metal atom, or an organic base, n represents a number from 1 to 8, and k represents 1 or 2;
a second step of spray-drying the dispersion obtained in the first step to obtain a zirconium oxide powder; and
a third step of mixing composition materials including the zirconium oxide powder obtained in the second step and a resin.

**3.** A zirconium oxide powder, comprising

zirconium oxide particles surface-treated with a phosphate represented by the following formula (1):

[Chem. 3]

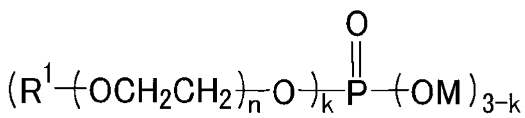

(1)

wherein $R^1$ represents a C1-C6 alkyl group, M represents a hydrogen atom, a metal atom, or an organic base, n represents a number from 1 to 8, and k represents 1 or 2,
the zirconium oxide powder having a bulk density of 1.5 $g/cm^3$ or less.

## INTERNATIONAL SEARCH REPORT

International application No. **PCT/JP2024/032320**

**A. CLASSIFICATION OF SUBJECT MATTER**

***C09C 3/08***(2006.01)i; ***C09C 1/00***(2006.01)i; ***C09D 201/00***(2006.01)i
FI: C09C3/08; C09C1/00; C09D201/00

According to International Patent Classification (IPC) or to both national classification and IPC

**B. FIELDS SEARCHED**

Minimum documentation searched (classification system followed by classification symbols)

C09C3/; C09C1/; C09D;C01G25/

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/026811 A1 (KURARAY NORITAKE DENTAL INC.) 07 February 2019 (2019-02-07) claims, paragraphs [0041], [0044] | 1-3 |
| Y | WO 2022/181302 A1 (SAKAI CHEMICAL INDUSTRY CO.) 01 September 2022 (2022-09-01) claims, paragraphs [0030] | 1-3 |
| A | JP 2010-159464 A (NATIONAL UNIVERSITY CORPORATION TOKYO UNIVERSITY OF AGRICULTURE AND TECHNOLOGY) 22 July 2010 (2010-07-22) claims | 1-3 |
| A | WO 2010/147069 A1 (HOYA CORPORATION) 23 December 2010 (2010-12-23) claims | 1-3 |
| A | WO 2016/002587 A1 (SEKISUI PLASTICS CO., LTD.) 07 January 2016 (2016-01-07) claims | 1-3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2024** | **26 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/032320**

**C. DOCUMENTS CONSIDERED TO BE RELEVANT**

| Category* | Citation of document, with indication, where appropriate, of the relevant passages | Relevant to claim No. |
|---|---|---|
| A | JP 2010-189506 A (DIC CORPORATION) 02 September 2010 (2010-09-02) claims | 1-3 |

Form PCT/ISA/210 (second sheet) (July 2022)

**INTERNATIONAL SEARCH REPORT**
**Information on patent family members**

International application No.
**PCT/JP2024/032320**

| Patent document cited in search report | Publication date (day/month/year) | Patent family member(s) | Publication date (day/month/year) |
|---|---|---|---|
| WO 2019/026811 A1 | 07 February 2019 | US 2020/0369573 A1<br>claims, paragraphs [0071], [0074]<br>EP 3663264 A1<br>CN 110891903 A<br>KR 10-2020-0035279 A | |
| WO 2022/181302 A1 | 01 September 2022 | US 2024/0150544 A1<br>claims, paragraph [0047]<br>EP 4299526 A1<br>CN 116917417 A<br>KR 10-2023-0152045 A<br>TW 202244156 A | |
| JP 2010-159464 A | 22 July 2010 | (Family: none) | |
| WO 2010/147069 A1 | 23 December 2010 | US 2012/0071680 A1<br>claims<br>CN 102448888 A | |
| WO 2016/002587 A1 | 07 January 2016 | US 2017/0101538 A1<br>claims<br>EP 3106495 A1<br>CN 106103601 A<br>KR 10-2017-0009826 A<br>TW 201623466 A | |
| JP 2010-189506 A | 02 September 2010 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010132494 A
- JP 2019038738 A
- JP 2022143972 A
- WO 2022181302 A